# EUROPEAN PATENT APPLICATION

(11) **EP 1 345 462 A1**
(43) Date of publication of application: **17.09.2003**
(21) Application number: 02405159.1
(22) Date of filing: 02.03.2002
(51) Int. Cl.: H04Q 7/38, H04L 29/06

(54) **Cordless telecommunication system and operating method therefor**

(71) Applicant: Ascom AG, 3000 Bern 14 (CH)
(72) Inventor: Carrick, Patricia, 4500 Solothurn (CH); Kaech, Gregory, 2503 Bienne (CH); Schneiderlin, Philippe, 4500 Solothurn (CH)
(74) Representative: RUTZ ISLER & PARTNER

(57) **Abstract**

The cordless telecommunication system comprises one or more location areas (LA) each containing one or more radio fixed parts (RFP) used by portable communication terminals (PP) and interworking by means of at least one gateway (GW) with a packet-network (PN), such as a network operating according to the Internet protocol suite, and comprising a server module (CSM) designed to control media traffic, voice, video and/or data, originating and/or terminating at the portable communication terminals (PP). Location data, resulting from location registrations of portable communication terminals (PP) in the location areas (LA1, LA2), are forwarded via the packet-network (PN) to the server module (CSM) and stored in a register (CSR), so that for calls, incoming and/or outgoing for a registered portable communication terminal (PP), a connection is established via a gateway (GW1; GW2) that is registered in the server module (CSM) and that corresponds to the registered location data of the addressed portable communication terminal (PP).

## Description

The present invention relates to a method for operating a cordless telecommunication system and to a cordless telecommunication system according to claim 1 and claim 9.

The present invention relates in particular to a method for setting up calls in a cordless telecommunication system operating according to standards such as the Digital Enhanced Cordless Telecommunications (DECT) standard (see [1], European Standard, Telecommunication Series, EN 300 175-1 to EN 300 175-9, part 1 to 9, and in [2], Jerry D. Gibson, THE COMMUNICATIONS HANDBOOK, CRC PRESS LLC, Boca Raton 1997, chapter 92, pages 1305-1325 or the British Cordless Telephone Standard CT-2 as described in [2], chapter 91, pages 1289-1304.

More particularly the present invention relates to a method for enhancing mobility of users of a cordless telecommunication system which for this purpose is connected to a packet-network such as a network operating according to the TCP/IP protocol suite (see [4], W. Richard Stevens, TCP/IP Illustrated, Volume 1, The Protocols, Addison Wesley, New York 1994, chapter 1, pages 1 to 19, or [5], Douglas E. Comer, INTERNETWORKING with TCP/IP, 4^{th} Edition, Prentice Hall, New Jersey 2000, chapter 3, pages 53 to 60 or [2], pages 702 - 704).

### BACKGROUND OF THE INVENTION

Cordless technology, in contrast to cellular radio, primarily offers access technology rather than fully specified networks. Digital Enhanced Cordless Telecommunications (DECT) is a second generation, pico-cellular system, which supports local-area mobility only.

Scalability and mobility of standard cordless telecommunication systems is limited to applications implemented in smaller areas. E.g., a company would therefore set up different cordless telecommunication systems in its headquarters and foreign branch offices. Said independently managed cordless telecommunication systems would then communicate over local private branch exchanges PBX connected to a public telecommunication network PSTN/ISDN. Consequently, users travelling between the company's offices would be required to register at each individual cordless telecommunication system.

Further, as described in [6], Anthony Lo, Winston Seah, Edwin Scheuder, Wide-Area Mobility for DECT Using Mobile IP, May 2000, VTC2000 Tokyo the interconnection of DECT to Internet is inadequate to support wide-area mobility because the Internet Protocol does not support host mobility between different sub-networks.

Hence, in [6] the interworking of DECT with Mobile IP is proposed in order to achieve subnet-level mobility while DECT is employed for user mobility within a subnet.

A similar solution is described in [7], WO 98/57508 A1. The basic idea described therein is to use Internet as goal network, Mobile-IP for base mobility handling and Voice over IP technology for call handling within the IP network.

Mobile IP allows a computer to move from one network to another without changing its IP address and without requiring all routers to propagate a host specific route. When it moves from its original home network to a foreign network, a mobile computer must obtain an additional, temporary address known as a care-of address. Applications use the mobile computer's original home address. The care-of address is only used by underlying network software to enable forwarding and delivery across the foreign network.

Once it detects that it has moved, a mobile computer either obtains a co-located care-of address or discovers a foreign mobility agent and requests the agent to assign a care-of address. After obtaining a care-of address, the mobile computer registers, directly or indirectly through its foreign agent, with its home agent and requests the home agent to forward datagrams. Both agents, the home agent and the foreign agent are Internet routers that implement Mobile IP.

Once registration is completed, a mobile computer can communicate with an arbitrary computer on the Internet. Datagrams sent by the mobile computer are forwarded directly to the specified destination. However, each datagram sent back to the mobile computer follows a route to the mobile's home network where it is intercepted by the home agent, encapsulated in IP and then tunnelled to the mobile computer (see [4], chapter 19, page 386).

The implementation of DECT technology in conjunction with Mobile IP, in particular the overall address handling, involves considerable effort. The implementation of Mobile IP further consumes resources that might be required to maintain a desired level of quality of service. In addition system behaviour in view of transmission time and transmission capacity is asymmetric since datagrams sent by the mobile computer or DECT-terminal are forwarded directly to the specified destination while datagrams sent back to the mobile computer are routed through the mobile's home network. On the route back voice data which are already encapsulated by means of the Real-Time Transport Protocol (RTP) are further encapsulated in IP and then tunnelled to the mobile computer (see [4], chapter 29, pages 539-551). An asymmetric behaviour of a network in real time applications, such as Voice over IP, is however disadvantageous.

It would therefore be desirable to provide an improved method and a cordless telecommunication system interworking with a packet-network, that provide enhanced scalability and user mobility.

It would be desirable in particular to provide a method and a cordless telecommunication system providing enhanced mobility, both in idle and in speech, while keeping additional administration overhead and use of system resources at a low level.

It would further be desirable to provide a method and a cordless telecommunication system interworking with a packet-network that provide enhanced user mobility, but do not require the implementation of Mobile IP protocols.

Further it would be desirable to provide a method and a cordless telecommunication system that provide improved quality of service performance under real time applications.

Still further, it would be desirable to provide a method and a cordless telecommunication system providing enhanced scalability and user mobility as well as the features and functionalities of a standard cordless telecommunication system without limitation.

### SUMMARY OF THE INVENTION

The above and other objects of the present invention are achieved by a method and a cordless telecommunication system according to claim 1 and claim 9.

The inventive method and cordless telecommunication system, operating for example according to DECT or CT-2 standards, allow the set up of location areas, that provide access to portable communication terminals, in distant places. Connections to the portable communication terminals are routed through a packet-network such as the Internet without requiring the implementation of the Mobile IP protocols thus reducing management overhead and bandwidth requirements while providing an improved quality of service performance under real time applications.

The inventive cordless telecommunication system may advantageously be connected to a call manager, e.g. a gatekeeper as specified in the H.323 protocol, which forwards calls from IP-terminals or from terminals of external telecommunication networks PSTN/ISDN which are connected to the packet-network via corresponding gateways.

Further the cordless telecommunication system may be connected to a company's private branch exchange PBX in order to allow its users to access the company's communication system by means of their portable communication terminals in all national or international branch offices.

The cordless telecommunication system comprises at least one location area, that is interworking with a packet-network, such as a network operating according to the Internet protocol suite. A server module comprising functionalities of the cordless system is preferably operating within said packet-network in order to control media traffic, voice, video and/or data, originating and/or terminating at the portable communication terminals.

Communication traffic may therefore be routed from external telecommunication networks or from internal IP terminals by means of a call manager to the server module and further to the addressed portable communication terminals.

For this purpose location data, resulting from location registrations of portable communication terminals in a location area, are forwarded via the packet-network to the server module and stored therein in a register.

Hence incoming calls for a registered portable communication terminal can be signalled using the IP-addresses of the gateways and the identities of the radio fixed parts that belong to the location area where the addressed portable communication terminal is currently registered.

The administration of the system can easily be handled since the set up of a portable communication terminal merely requires the maintenance of the registers stored in the server module and, if present, in the call manager, which may be a gatekeeper operating according to the H.323 protocol.

In principle, identification of the portable communication terminals could be done by means of the International Portable Equipment Identity IPEI which is unique for each terminal. However, since the length of the IPEI is cumbersome to handle, an identity is preferably issued and assigned by the system administrator. Since the number of portable communication terminals of the company's cordless telecommunication system is relatively low, the issued numbers can be short.

In a preferred embodiment of the invention the Temporary Portable User Identities TPUI assigned to the portable communication terminals have a fixed relationship to the system identities provided by the system administrator. This measure further facilitates system administration.

The location registration procedures, used by a portable communication terminal in order to inform the server module about its current location area are performed according to the standards of the cordless telecommunication system, e.g. DECT or CT-2.

As described in [6], (see abstract) mobility features of DECT offer fast convergence and less overhead. According to the invention features of the cordless telecommunication system are also used to provide wide-area mobility, further avoiding overhead which would result from the implementation of the Mobile IP protocol.

The inventive cordless communication, which exploits all the capabilities of the applied cordless telecommunication standard, requires therefore less bandwidth, less time for location registration and call setup procedures and less overhead, compared e.g. to systems using Mobile IP. This provides further advantages in cases where handover procedures are performed.

### BRIEF DESCRIPTION OF THE DRAWINGS

Some of the objects and advantages of the present invention have been stated, others will appear when the following description is considered together with the accompanying drawings, in which:
- Figure 1: shows a known private branch exchange connected to a telecommunications network, to the Internet and comprising fixed part modules of a DECT telecommunication system;
- Figure 2: shows the protocol architecture of the DECT system;
- Figure 3: shows the DECT C-plane network layer;
- Figure 4: shows an inventive cordless telecommunication system designed for wider-area mobility;
- Figure 5: shows the protocol architecture of a preferred embodiment of the cordless telecommunication system of figure 4;
- Figure 6: shows call setup procedures performed in a known DECT-system
- Figure 7: shows handover procedures performed in a known DECT-system
- Figure 8: shows call setup procedures in the communication system of figure 4;

- Figure 9: shows handover procedures in the communication system of figure 4 and
- Figure 10: shows the status of connections to portable communication terminals.

### DETAILED DESCRIPTION OF THE PREFERRED EMBODIMENTS

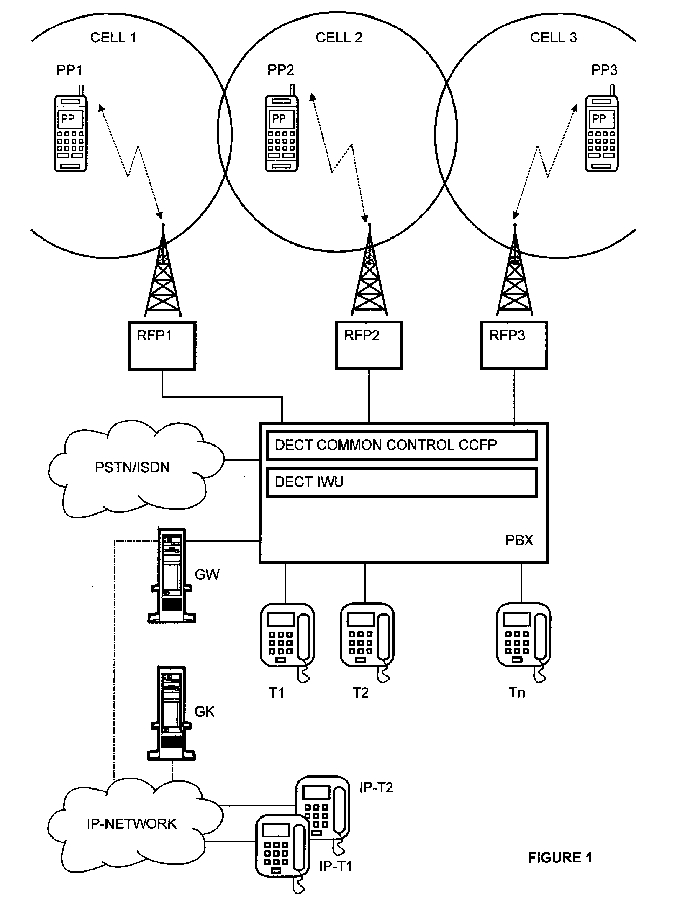

Figure 1 shows a known private branch exchange PBX, that is connected to a public telecommunication network PSTN/ISDN and over a gateway GW to an IP-network and that comprises fixed part modules, a common control unit CCFP and an interworking unit IWU of an attached cordless telecommunication system.

The private branch exchange PBX can therefore switch connections between portable communication terminals PP1, PP2, PP3 of the cordless telecommunication system, terminals connected to the public telecommunications network PSTN/ISDN, IP-terminals IP-T1, IP-T2, ... connected to the IP-network and terminals T1, ..., Tn directly connected to the private branch exchange PBX.

Voice and data are transmitted between the IP-terminals IP-T1, IP-T2 by means of IP-telephony or Voice-over-IP technologies as specified in the H.323 standard or the Session Initiation Protocol (SIP). The International Telecommunication Union (ITU) originally created the H.323 standard to allow the transmission of voice over local area network technologies. Meanwhile the standard has been extended to allow transmission of voice over Internet. The H.323 standard provides multiple protocols that can be combined to form a functional IP telephony system. In addition to gateways (Figure 1, gateway GW) the H.323 standard defines devices known as gatekeepers (Figure 1, gatekeeper GK) that provide a contact point for telephones using IP (IP-T1, IP-T2, ...) .

A key functionality of gatekeepers, which are described in [8], Antoine Delley, Voice over IP und Multimedia, Hochschule für Technik und Architektur, Freiburg 2000, pages 319-322 is address conversion allowing to convert telephone numbers (e.g. E164 telephone numbers) to corresponding IP addresses. Said H.323 functionalities, i.a. gateway and gatekeeper, could also be integrated in the private branch exchange shown in Figure 1.

The Internet Engineering Task Force (IETF) has proposed an alternative to H.323 called the Session Initiation Protocol (SIP), that covers signalling. However SIP does not recommend specific codecs (coder/decoder) nor does it require the use of the Real-Time Transport Protocol RTP for real time transfer. SIP does therefore not supply all functionality of the H.323 standard (see [4], chapter 29).

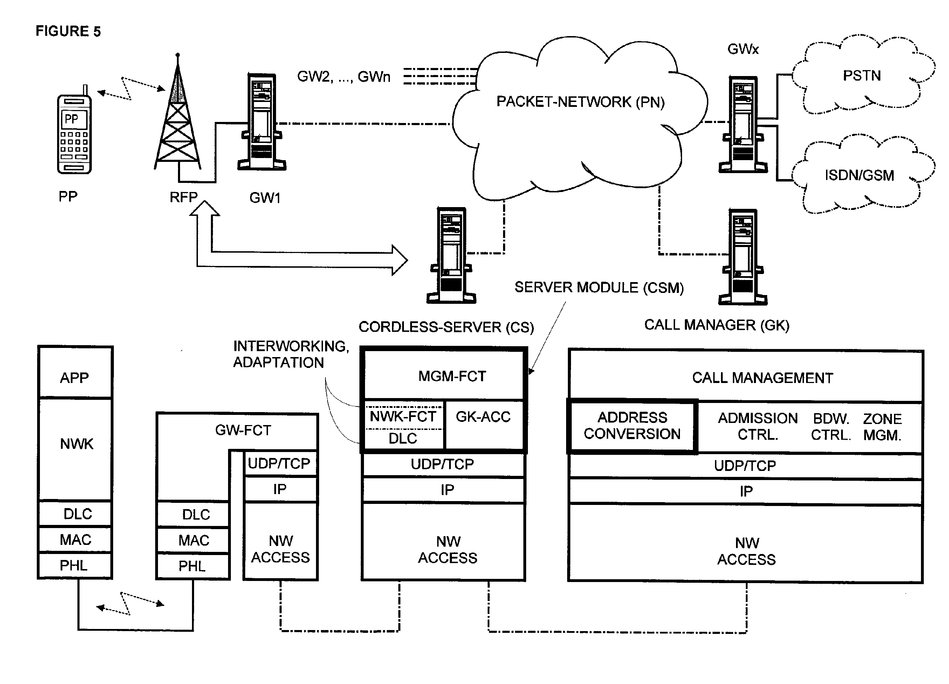

Further shown in figure 1 is a DECT cordless telecommunication system, that is integrated into the private branch exchange PBX. A DECT cordless telecommunication system consists of at least one Fixed Radio Termination and a plurality of Portable Radio Terminations as logical elements (see [5], page 116, figure 5.9). In view of the physical structure a DECT-system may be realised in various forms. Physically the DECT-system is split into two parts, the DECT Fixed Part and the DECT Portable Part. The DECT Fixed Part consists of at least one Radio Fixed Part RFP comprising a Radio End Point REP, that covers a cell of the wireless DECT-network (see [5], page 116, figure 5.10). The DECT Fixed Part further comprises the above mentioned common control unit CCFP or cluster controller that handles the connected Radio Fixed Parts RFP and the interworking unit IWU that allows the connection of the DECT-system to a further network (e.g. ISDN/GSM) (see [2], pages 1306-1307).

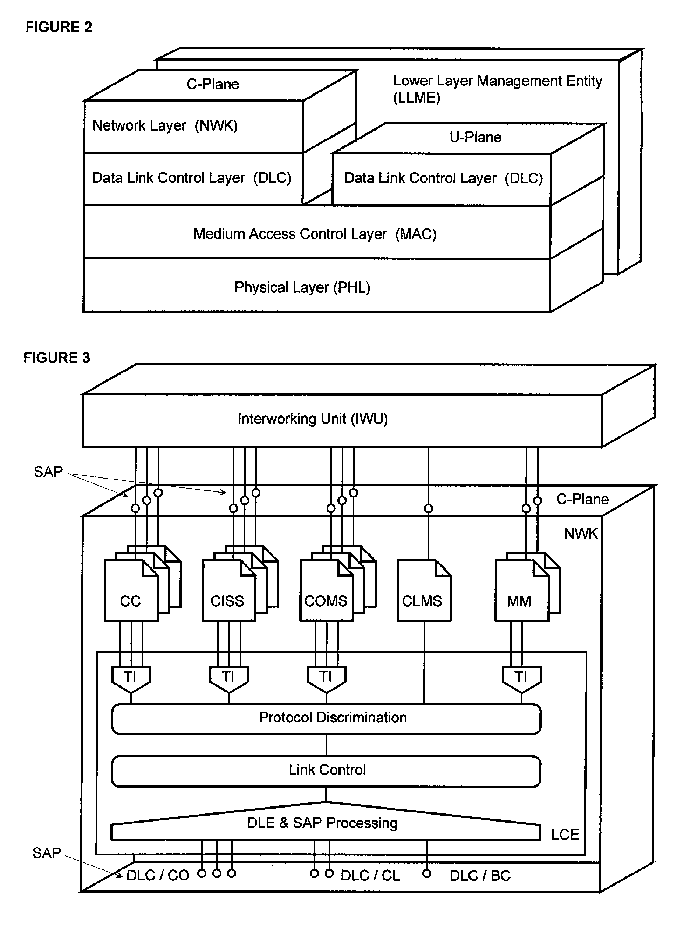

Figure 2 shows the DECT protocol architecture. The complete DECT air interface corresponds to the first three ISO OSI layers; however since the OSI protocol stack does not adequately consider multiple access to one transmission medium, the DECT structure uses four layers for the node-to-node communication: the Physical Layer, the Medium Access Control Layer, the Data Link Control Layer and the Network Layer (C-plane only, see figure 3). The Network Layer is the main signalling layer of the protocol and is similar to the ISDN layer 3 protocol. It supports the establishment, maintenance and release of the connections. Main network layer services are call control CC, call independent supplementary services CISS, connection oriented message service COMS, connection less message service CLMS and mobility management MM.

A Lower Layer Management Entity LLME interfaces with all of the previous layers to provide procedures that concern more than one layer (see [2], 1311-1321).

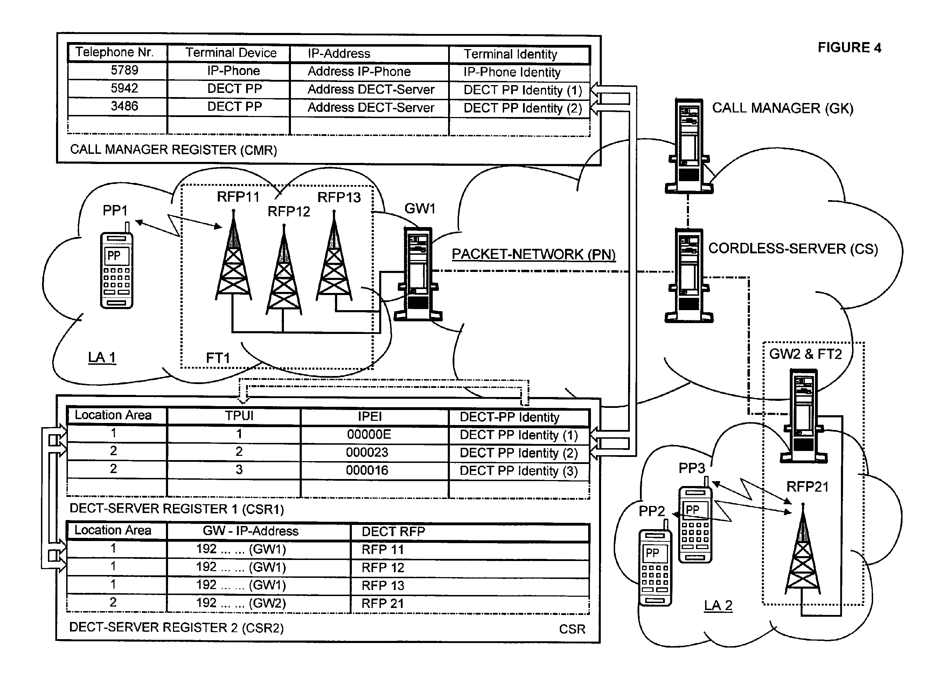

Figure 4 shows a preferred embodiment of an inventive cordless telecommunication system, comprising two location areas LA1, LA2, operating according to the DECT standard and interworking by means of gateways GW1, GW2 with a packet-network PN that is operating for example according to the Internet protocol suite.

As described above, the DECT cordless telecommunication system is split into two parts, the DECT Portable Part PP and the DECT Fixed Part FP. The location areas LA1; LA2 each contain one gateway GW1; GW2 and one or more radio fixed parts RFP11, RFP12, RFP13; RFP21. The gateways GW1, GW2 and the radio fixed parts RFP form a part of the DECT Fixed Part, the other part, namely the whole of the C-Plane Network Layer functionality together with part of the DLC Layer is located in an external cordless server CS operating in the packet-switching network PN.

According to the present invention said C-Plane Network Layer functionality has therefore to be accessed through the packet-network PN. In the embodiment shown in figure 4, both location areas LA1, LA2 access said C-Plane Network Layer functionality through the packet-network PN. As an alternative said C-Plane Network Layer functionality could be incorporated in a gateway e.g. GW1 or even in a radio fixed part RFP and would be accessed by all other gateways GW through the packet network PN.

The said C-Plane Network Layer functionality could also be incorporated in many external cordless servers CS (or even in many gateways GW), each cordless server CS being responsible for a number of portable communication terminals PP but able to communicate with all gateways GW and all radio fixed parts RFP.

The cordless telecommunication system of figure 4 described so far already provides wide-area mobility for users of the portable communication terminals PP1, PP2, however without connectivity to terminals outside the cordless telecommunication system. In order to communicate with further fixed or mobile terminals T1, ..., Tn; IP-T1, ..., IP-Tn the C-Plane Network Layer functionality contained in said cordless server CS is interworking with other networks PSTN/ISDN/IP.

In the system shown in figure 4 the C-Plane Network Layer functionality is interworking with an H.323 Voice over IP domain, implemented within the packet-network PN.

However, a C-Plane Network Layer functionality implemented within a gateway GW could be connected directly over an interworking unit IWU with other telecommunication networks PSTN/ISDN and a the gateway would be connected to the IP-network in order to communicate with the remaining location areas LA2, ..., LAn.

Figure 5 shows the protocol architecture of the cordless telecommunication system of figure 4. The portable communication terminals PP as well as the fixed part elements comprise the layered structure discussed above. The application layer APP in the portable communication terminals PP is not standardised. The gateway GW1 comprises a gateway-functionality that allows transportation or tunnelling of data originating or terminating in the cordless system through the packet-network which uses the Internet Protocol suite (UDP/TCP-IP). Of course, DECT fixed part units and gateway functions can physically be integrated in one system module or realised in separate modules.

The protocol stack of the cordless server CS comprises above the lower network layers UDP/TCP-IP a server module CSM in which said C-Plane Network Layer functionality is integrated in a module NWK-FCT. The server module CSM, in this preferred embodiment, further comprises a module GK-ACC that interfaces the server module CSM to a call manager GK, operating for example as a gatekeeper according to the H.323 protocol and providing address translation as well as signalling for the set up of connections to terminals within the H.323 domain or within external networks PSTN/ISDN. The protocol stack of a H.323 gateway is described in [8], pages 319-322. As shown therein (see [8], Figure 3-7), the media stream is not routed through the gatekeeper.

In order to establish calls terminating at the portable communication terminals PP the described server module CSM needs to know their locations. For this purpose the DECT standard provides Mobility Management (MM) procedures as specified in [1,6], part 6, EN 300 175-5-V1.6.0 (2001-10), pages 192 - 202 (see drawings, figure 3). Besides identity procedures; authentication procedures; access right procedures; key allocation procedures; parameter retrieval procedures and ciphering related procedures, Mobility Management (MM) procedures comprise location procedures.

The location registration procedure is used to indicate to the Fixed Termination FT where the Portable Termination PT is located in terms of location areas, where a location area consists of part of one or several DECT systems.

Further, the location registration procedure is based on the International Portable User Identity (IPUI) and is only carried out with respect to the IPUI that is active at the time. Location registration without changing the location is referred to as attach, which is the process whereby a Portable Termination PT informs the Fixed Termination FT that it is ready to receive incoming calls.

The server module CSM, which incorporates Mobility Management functionalities MM in the C-Plane Network Layer Module NWK-FCT (see figure 3), maintains therefore a register CSR with a table CSR1 in which International Portable Equipment Identities (IPEI), corresponding Temporary Portable User Identities (TPUI) and the received location data, in particular information regarding the current Location Area are stored (see figure 4). Procedures for temporary identity (TPUI) assignment are described in [1,6], chapter 13.2.2, page 194.

The server module CSM further comprises a table CSR2 in which for each Location Area (location area LA1, LA2, ...) the corresponding addresses of the gateways GW1, GW2 and the related Radio Fixed Parts RFP1, RFP2, ... are stored. With the stored information the server module CSM is therefore able to establish connections to the portable communication terminals PP. Connections can therefore be established between all of the portable communication terminals PP1, PP2, ..., PPn that are attached to the cordless telecommunication system. In the case that a company has several international locations, personnel can attach portable communication terminals at a foreign location in the same way as they do at their home location.

When a call comes in for a portable communication terminal PP, the server module CSM will page the portable communication terminal PP by sending a PAGE message, containing the identity of the portable communication terminal PP, to all radio fixed parts RFP in the concerned location area LA.

In order to communicate with terminals outside the cordless telecommunication system the cordless server CS is interworking with external networks such as a Public Switched Telephone Network PSTN, for example the Integrated Services Digital Network ISDN, via a Private Branch Exchange PBX with a private telephone network or by means of H.323 gatekeeper with a Voice over IP-network.

In the system shown in figure 4 the cordless server CS is connected to a call manager that operates as a H.323 gatekeeper (see [8], pages 3.19-3.21). In order to forward calls to IP-Terminals and to the cordless server CS the call manager GK performs translations of the addresses assigned to the terminals (e.g. E.164 telephone numbers) for use in a foreign network PSTN/ISDN to corresponding addresses used in the packet-network PN. The addresses of the terminals are maintained in a register CMR stored in the call manager GK.

Calls for portable communication terminals PP are routed to the cordless server CS which establishes the required connections. Corresponding to telephone numbers of the portable communication terminals PP the register CMR stored in the call manager GK therefore contains the IP address of the cordless server CS.

For the identification of the called portable communication terminals PP, the cordless server CS further needs to know their identities. Identities of the portable communication terminals PP corresponding to their phone numbers are therefore entered in addition to the IP-address of the cordless server CS into the register CMR of the call manager GK as well as in the first table CSR1 of the register CSR stored in the cordless server CS (see figure 4, registers CMR and CSR, DECT PP Identity). For each incoming call the call manager GK therefore forwards this identity to the cordless server CS so that the connection to the identified terminal can be established.

Since the number of portable communication terminals PP belonging to the cordless telecommunication system is relatively low, a short identity number, below called system identity, may be issued by the system administrator and stored in the registers CMR, CSR. However, since the International Portable Equipment Identity IPEI unambiguously identifies the related portable communication terminal PP, the IPEI could also be used by the call manager GK and the cordless server CS in order to communicate the identity of a called portable communication terminal PP.

Further, since the system identities issued by system administration are unique for each portable communication terminal PP within the system, these short system identities, which do not allow the identification of the users of the portable communication terminals PP, may simultaneously be used as Temporary Portable User Identities TPUI.

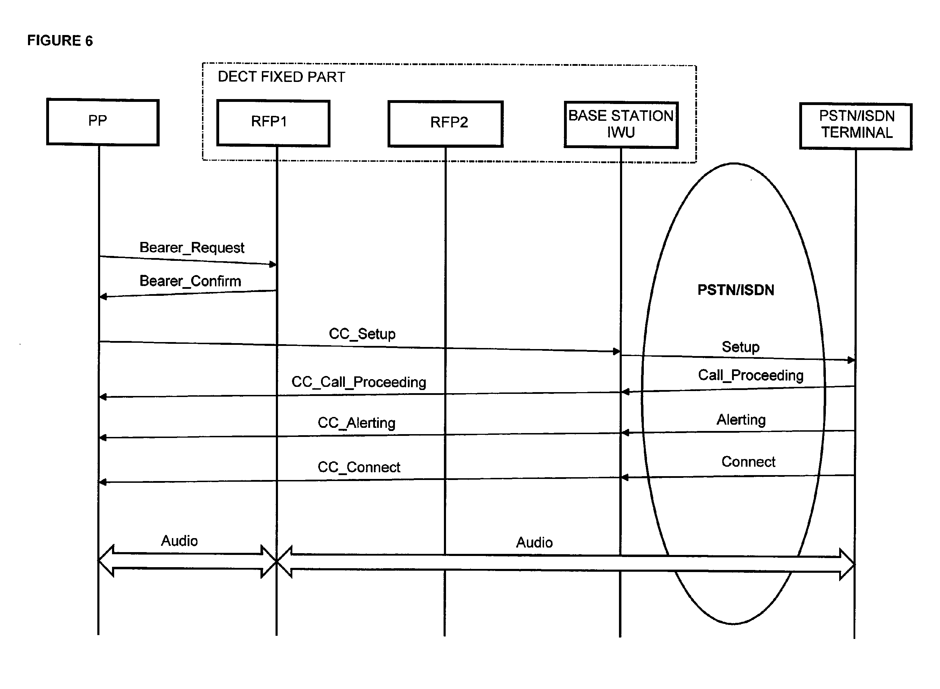

Figure 6 shows an example of a call setup procedure performed in a known DECT-system. Upon receipt of a connection setup request in the status IDLE LOCKED, in which the portable part PP is synchronised with radio fixed part RFP1 (see [5], page 131, figure 5.20), the set up of a bearer is performed by the MAC layer entities (see [5], page 144, figure 5.29). The set up of a connection is performed by the Call Control entity CC of the network layer NWK. In figure 6 the call setup is initiated by the portable part PP by sending a CC_Setup message. The fixed party replies with the message CC_Call_Proceeding, indicating that the call is in progress. The CC_Alerting message indicates that the called terminal is ringing. With CC_Connect the set up of the connection is indicated to the U-Plane, which allows the transfer of user data via the radio fixed part RFP1.

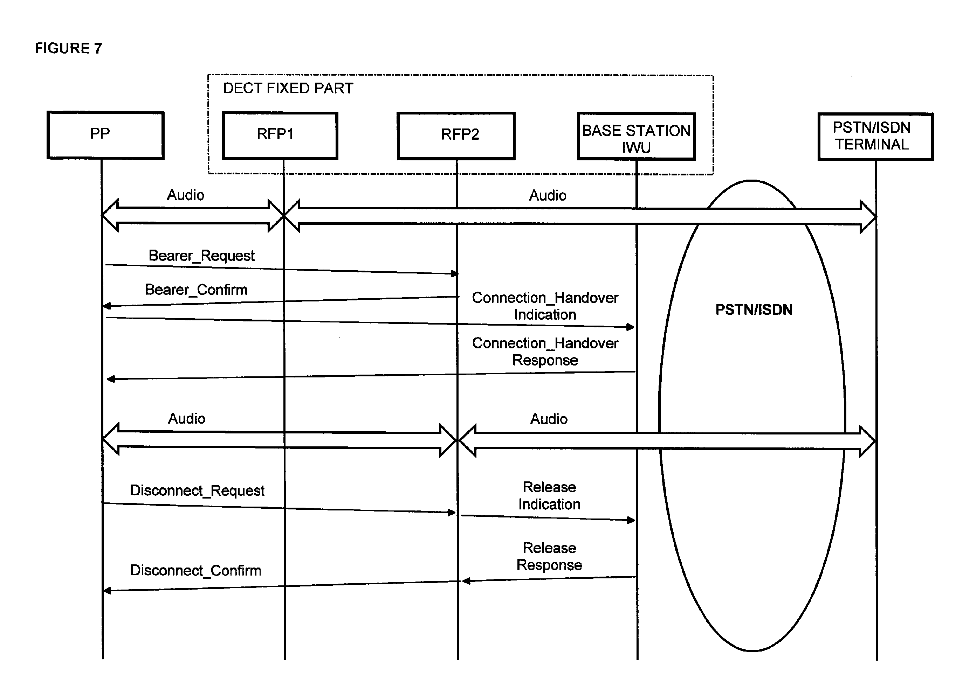

Figure 7 shows handover procedures performed in a known DECT-system after the set up of a connection as shown in figure 6. In order to provide seamless intracell or intercell handover (see [5], pages 176 to 181) an additional bearer is established, which provides better quality of service. Since the user leaves the range of the first radio fixed part RFP1 an intracell handover is insufficient in the given example. Therefore a bearer is established towards the second radio fixed part RFP2 so that two bearers are maintained in parallel and a seamless intercell handover can take place. After the exchange of Connection_Handover_Indication and Connection Handover Response messages the data stream is handed over to the second radio fixed part RFP2 and the bearer to the first radio fixed part RFP1 is released.

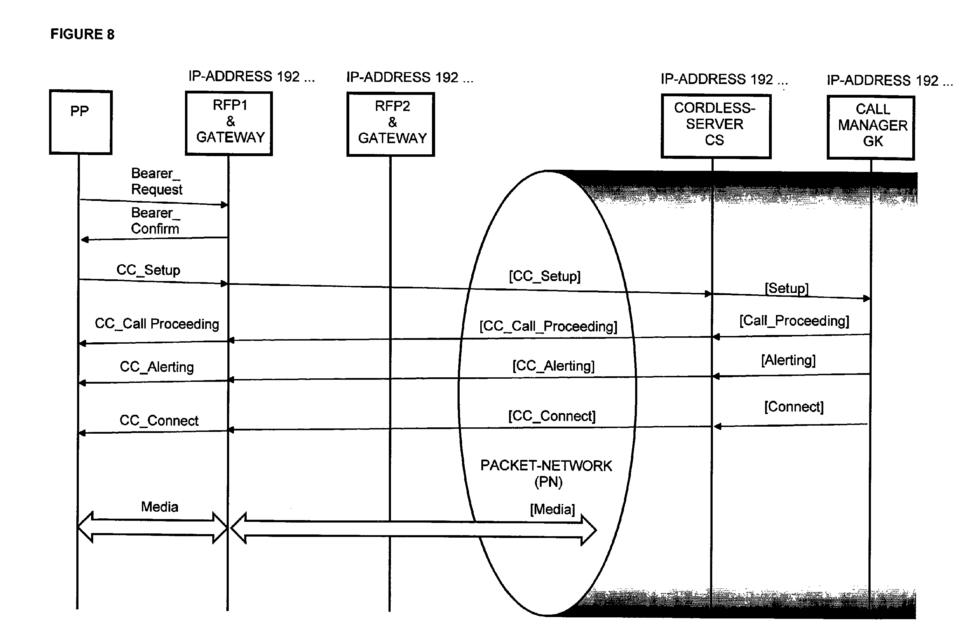

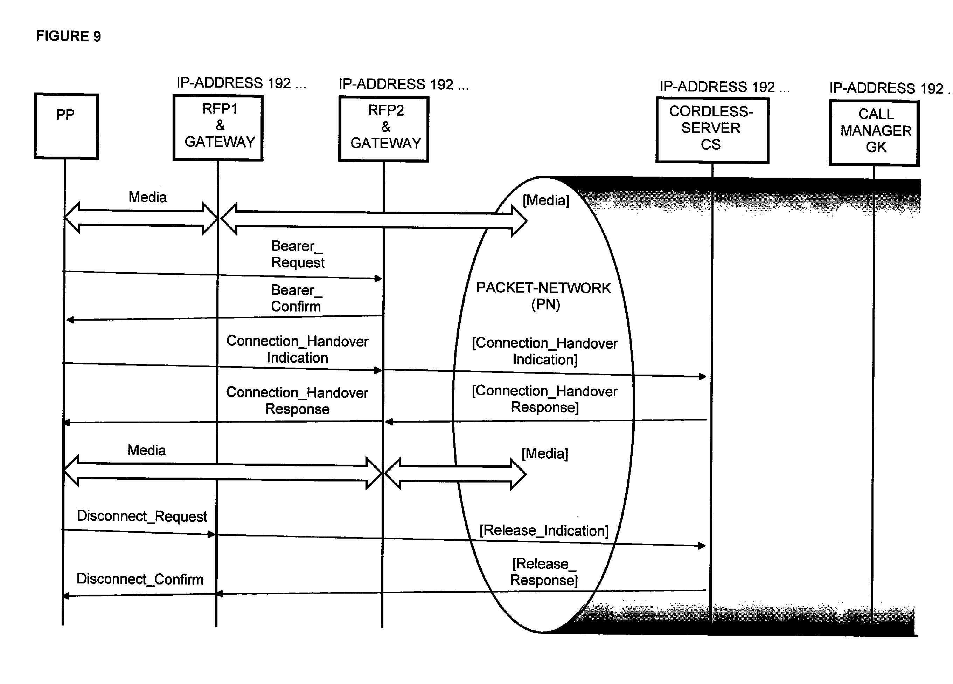

Figure 8 shows a possible call-setup procedure taking place in the inventive cordless telecommunication system of figure 4. The bearer setup and call control messages exchanged between the portable part PP and the first radio fixed part RFP1 are not changed. Some of these messages are tunnelled within the connected IP-network until they reach the cordless server CS. The gateway GW1 connected to the radio fixed part RFP1 puts the DECT-data into IP datagrams (indicated in figures 8 and 9 by brackets) and forwards the datagrams to the cordless server CS where the datagrams are unpacked and the DECT data is processed by the DLC part and the C-plane layer 3 network functionality NWK of the cordless server CS. DECT-data returned to the portable part PP is packed into IP datagrams, forwarded and unpacked by the related gateway GW1. Subsequently the user data are transferred via the first radio fixed part RFP1 and tunnelled under IP. Compared to Mobile IP (see [4], chapter 19, page 386) only one IP-tunnel is required and route lengths for both directions will on average be symmetrical.

Figure 9 shows a handover procedure in the inventive cordless telecommunication system of figure 4. On the DECT-network side bearer setup and handover procedures are equivalent to the procedures shown in figure 7. However, for the transfer to the cordless server CS the DECT data are tunnelled within the packet-network PN.

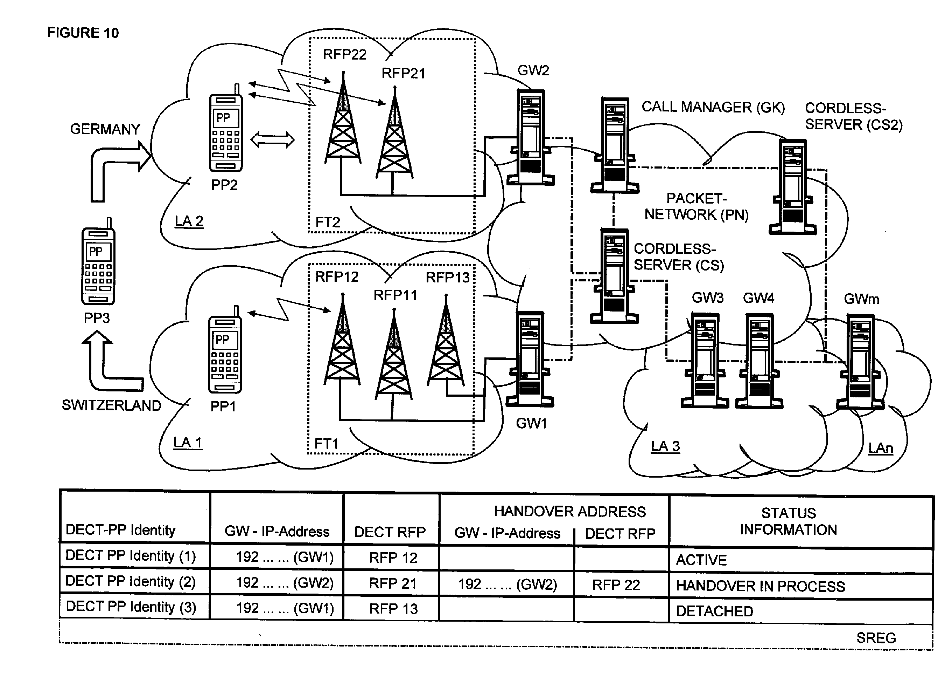

Figure 10 shows the status of connections to the portable communication terminals PP as monitored by the cordless server CS.

A first portable communication terminal PP1 is attached to a first location area LA1 set up at a company's premises in Switzerland and a second portable communication terminal PP2 is attached to a second location area LA2 set up at the company's premises in Germany. A third portable communication terminal PP3 has been detached from the first location area LA1 and will be attached to the second location area LA2 as soon as it reaches this location area.

The status information for said portable communication terminals PP1, PP2, PP3 is shown in the status register SREG that is maintained by the cordless server CS.

In line 1 it is indicated that the first portable communication terminal PP1 is connected to radio fixed part RFP12. Line 2 indicates that an intercell handover is in process for the second portable communication terminal PP2 (change from radio fixed part RFP21 to radio fixed part RFP22). Line 3 shows that the third portable communication terminal PP3 has been detached.

Figure 10 further shows that the inventive cordless telecommunication system has a high scalability. Various location areas LA3, ..., LAn can be set up at any locations, that have access to the packet-network PN, e.g. the Internet. Further a location area LA may comprise two or more gateways GW1, GW2, ..., GWm. In addition, the gateways GW1, GW2, ..., GWn may be connected to two or more cordless servers CS. The example in figure 10 shows a location area LA3 with two gateways GW3 and GW4 that have access to the two cordless servers CS and CS2 operating in the packet-network.

Further, the inventive cordless telecommunication system provides features and functionalities of a standard cordless telecommunication system without limitations. A location area LA can also contain more than one gateway GW or even no gateway GW at all, only base stations or radio fixed parts RFP. Further two or more location areas LA can share a gateway GW, i.e. the base stations or radio fixed parts RFP attached to a gateway GW can be in different location areas LA. Further in order to share the load, several cordless servers CS, that serve different portable communication terminals PP, may use the same gateways GW.

As will be recognised by those skilled in the art, the innovative concepts described in the present application can be modified and varied over a wide range of applications. The modules of the cordless server CS could be transferred to various parts of the interworking networks. Different networks may be connected to the cordless server CS. Further the invention is not limited to specific communication terminals, applications installed in the portable communication terminals or specific media transferred across the networks. An inventive cordless telecommunication network may also comprise more than one cordless server CS.

### REFERENCES :

[1, 1-9] ETSI, European Standard (Telecommunication Series ) EN 300 175-1 to EN 300 175-9, part 1 to 9
[2] Jerry D. Gibson, THE COMMUNICATIONS HANDBOOK, CRC PRESS LLC, Boca Raton 1997
[3] W. Richard Stevens, TCP/IP Illustrated, Volume 1, The Protocols, Addison Wesley, New York 1994
[4] Douglas E. Comer, INTERNETWORKING with TCP/IP, 4^{th} Edition, Prentice Hall, New Jersey 2000
[5] B. Walke, Mobilfunknetze und ihre Protokolle, Band 1, B.G. Teubner Verlag, Stuttgart 2000
[6] Anthony Lo, Winston Seah, Edwin Scheuder, Wide-Area Mobility for DECT Using Mobile IP, May 2000, VTC2000 Tokyo
[7] WO 98/57508 A1
[8] Antoine Delley, Voice over IP und Multimedia, Hochschule für Technik und Architektur, Freiburg 2000

## Claims

1. Method for operating a cordless telecommunication system with one or more location areas (LA) each comprising one or more radio fixed parts (RFP) used by portable communication terminals (PP) and interworking by means of at least one gateway (GW) with a packet-network (PN), such as a network operating according to the Internet protocol suite, and comprising a server module designed to control media traffic, voice, video and/or data, originating and/or terminating at the portable communication terminals (PP), **characterised in, that** location data, resulting from location registrations of portable communication terminals (PP) in the location areas (LA1, LA2), are forwarded via the packet-network (PN) to the server module (CSM) and stored in a register (CSR), and that for calls, incoming and/or outgoing for a registered portable communication terminal (PP), a connection is established via a gateway (GW1; GW2) that is registered in the server module (CSM) and that corresponds to the registered location data of the addressed portable communication terminal (PP).

2. Method according to claim 1, wherein the connection to the addressed portable communication terminal (PP) is established based on the IP-address of the gateway (GW1; GW2) and the identity of the connecting radio fixed part (RFP11; RFP12; RFP21; RFP22) that are stored in the register (CSR) of the server module (CSM).

3. Method according to claim 1 or 2, wherein calls are forwarded from a call manager (GK) to the server module (CSM) by means of a static or dynamic identity assigned to the portable communication terminals (PP).

4. Method according to claim 3, wherein a static identity assigned to the portable communication terminals (PP), the International Portable Equipment Identity IPEI or a system identity provided by the system administration, together with the IP-address of the server module (CSM) is stored in a register (CMR) contained in the call manager (GK) so that for call setup procedures the server module (CSM) can be contacted and the addressed portable communication terminal (PP) can be identified by means of a corresponding entry of the identity assigned to the portable communication terminals (PP) in the register (CSR) of the server module (CSM).

5. Method according to claim 4, wherein the Temporary Portable User Identities TPUI assigned to the attached portable communication terminals (PP) have a fixed relationship to the identities provided by the system administration.

6. Method according to one of the claims 1-5, wherein the register (CSR) comprises a first table (CSR1) with data, identities and location data, of the portable communication terminals (PP) and a second table (CSR2) with location data of network elements (GW1, GW2, RFP11, RFP12, RFP21, ...) and in which said tables (CSR1, CSR2) are related to each other by the server module (CSM) in order to establish a route for a call connection.

7. Method according to one of the claims 1-6, wherein a handover from a first to a second connection is performed by the server module (CSM) upon request by the portable communication terminal (PP).

8. Method according to one of the claims 1-7, wherein the portable communication terminals (PP), the fixed part modules (RFP) connected to the packet-network (PN) and the server module (CSM) operate according to the DECT- or the CT-2 standard.

9. Cordless telecommunication system with one or more location areas (LA) each comprising one or more radio fixed parts (RFP) used by portable communication terminals and interworking by means of at least one gateway (GW) with a packet-network (PN), such as a network operating according to the Internet protocol suite, and comprising a server module designed to control media traffic, voice, video and/or data, originating and/or terminating at the portable communication terminals (PP), **characterised in, that** at least one of the radio fixed parts (RFP) is connected to the server module (CSM) via a gateway (GW1; GW2) and the packet-network (PN), that the server module (CSM) comprises a register (CSR) designed to receive location data of the portable communication terminals (PP) as well as related address data of the gateways (GW1, GW2) of the served location areas (LA1, LA2) in order to route media traffic via the related gateways (GW1; GW2) to and/or from the addressed portable communication terminals (PP).

10. Cordless telecommunication system according to claim 9, wherein the server module (CSM) is operating within a radio fixed part (RFP), within a gateway (GW); or within the packet-network (PN), so that all gateways (GW) are connected to the server module (CSM) via the packet-network (PN).

11. Cordless telecommunication system according to claim 9 or 10, wherein at least one call manager (GK), operating within the packet-network (PN) is provided that routes media traffic addressed to the portable communication terminals (PP) to the server module (CSM).

12. Cordless telecommunication system according to claim 9, 10, or 11, wherein the call manager (GK), preferably a gatekeeper as defined in the H.323 protocol, comprises a register (CMR) which contains at least the phone number of the addressable portable terminal devices (PP, IP-T), the IP-address of the related server module (CSM) as well as identities of the addressable portable communication terminals (PP) that are controlled by the server module (CSM).

13. Cordless telecommunication system according to claim 12, wherein the register (CSR) in the server module (CSM) contains in a first table (CSR1) the system identity of the addressable portable communication terminals (PP) as listed in the call manager (GK), the International Portable Equipment Identity IPEI, the Temporary Portable User Identity TPUI and the corresponding location information, and in a second table (CSR2) the IP-address of the gateway (GW1; GW2), the identity of the radio fixed part (RFP) and the related location data by which the data stored in the tables (CSR1, CSR2) can be related.

14. Cordless telecommunication system according to one of the claims 9-13, wherein the portable communication terminals (PP), the fixed part modules (RFP) connected to the packet-network (PN) and the server module (CSM) operate according to the DECT- or the CT-2 standard.

15. Cordless telecommunication system according to one of the claims 9-14, wherein the server module (CSM), supported by Internet protocol layers TCP and/or UDP and IP, comprises a management function designed to control a DECT-Layer 3 module (NWK-FCT) and a call manager access module (GK-ACC).

16. Cordless telecommunication system according to one of the claims 9-15, wherein the server module (CSM) and/or the call manager (GK) are connected to or at least partly integrated into a private branch exchange.
